(19) **Europäisches Patentamt / European Patent Office / Office européen des brevets**

(11) **EP 2 015 240 A1**

(12) **EUROPEAN PATENT APPLICATION**

(43) Date of publication:
**14.01.2009 Bulletin 2009/03**

(51) Int Cl.:
**G06Q 10/00** (2006.01)   **H04L 12/58** (2006.01)

(21) Application number: **08159987.0**

(22) Date of filing: **09.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **09.07.2007   CN 200710128086**
**06.03.2008   PCT/CN2008/070427**

(71) Applicant: **Huawei Technologies Co., Ltd.**
**Longgang District,**
**Shenzhen,**
**Guangdong 518129 (CN)**

(72) Inventors:
- **Liu, Jing**
**518129, Shenzhen (CN)**
- **Liu, Quiao**
**518129, Shenzhen (CN)**
- **Qin, Zhiguang**
**518129, Shenzhen (CN)**
- **Zheng, Zhibin**
**518129, Shenzhen (CN)**

(74) Representative: **Hengelhaupt, Jürgen et al**
**Gulde Hengelhaupt Ziebig & Schneider**
**Patentanwälte - Rechtsanwälte**
**Wallstrasse 58/59**
**10179 Berlin (DE)**

(54) **Method, device and system for determining mail class**

(57)   The present invention discloses a method, device and system for determining a mail class. The method for determining a mail class includes: reading a mail head of a mail with an unknown class; extracting a first field in compliance with a first preset condition from the mail head; vectorizing combinations of the first field and its presentation forms into a first preset number of first feature vectors; taking the first feature vectors as input to a preset predictive algorithm for calculation with use of data stored for a pre-established behavior model to derive a calculation result; and determining the mail class of the mail with an unknown class from the calculation result.

Fig.2

## Description

This application claims the priority of Chinese Patent Application No. 200710128086.6, entitled "METHOD, DEVICE AND SYSTEM FOR DETERMINING MAIL CLASS AND DEVICE FOR ESTABLISHING BEHAVIOR MODEL", and filed with the Chinese Patent Office on July 9, 2007, and the priority of International patent application No. PCT/CN2008/070427, entitled "METHOD, DEVICE AND SYSTEM FOR DETERMINING MAIL CLASS", and filed on March 6, 2008, which are hereby incorporated by reference in its entirety.

## Field of the Invention

The present invention relates to Internet technologies and in particular to a method, device and system for determining a mail class.

## Background of the Invention

E-mails over the Internet have been popular with net users as a predominant application. However, the problem of junk mails becomes increasingly serious in recent years. The junk mails are essentially characterized in that they are unsolicited and most of them are generally for business or other advertisement purposes. Meanwhile, determination of a junk mail is closely related to a receiver of the mail, and different users may have different results of determining the same mail. With the development of technology, filtering junk mails is in transition from technologies simply based upon static rules and statistic classification to technologies based upon behavior.

Current primary methods for filtering junk mails are typically based upon the content of a mail. A method for filtering junk mails is based upon Learning Vector Quantization (LVQ). The LVQ is an iterative learning algorithm for performing a "reward/punishment" according to the feature of a sample pattern. The main idea of the LVQ is as follows. Firstly, a training set is set. Data of the training set results from partially vectorization of the mail body of a mail with a known class. For a vector from the training set, if it belongs to the same class as the closest neuron, learning is not performed. Specifically, the vector from the training set is used as an input to the LVQ algorithm for calculation. If a calculation result complies with a preset requirement, it indicates that the vector belongs to the same class as the closest neuron, and parameters of the algorithm will not be modified. Otherwise, if the calculation result does not comply with the preset requirement, neurons classified incorrectly will be punished and those classified correctly will be rewarded. In other words, if the calculation result does not comply with the preset requirement, the parameters of the algorithm will be modified. A neural network consists of a plurality of neurons. For a neuron with a correct calculation result, it is rewarded, and an iterative formula corresponding to the reward is used for iteration. And for a neuron with an incorrect calculation result, it is punished, and an iterative formula corresponding to the punishment is used for iteration. After a number of iterations, if the resulting set of vectors no more changes obviously, i.e. all of the calculation results comply with the preset requirement, it is indicating that the training of the training set is accomplished.

When a mail is being filtered, the content of the mail is divided into words, and the frequency of occurrence of each word is calculated. Then, the frequency of occurrence of each word is used as an input value to the LVQ algorithm for calculation with use of the parameters resulting from the training. If the value resulting from the calculation is determined to approximate to 1, the mail is a junk mail. Inversely, if the value is determined to approximate to 0, the mail is not a junk mail, thereby accomplishing the filtering of a junk mail.

The inventors have identified during making the invention at least the following drawbacks of the prior art.

Mail body with a large amount of contents which vary greatly may cause slow training, incomplete training set, etc., which may result in a low mail filtering accuracy. And, contents and formats of mail bodies are undetermined, which may result in slow determination of a junk mail. Furthermore, the mail body of a non-Chinese mail may be represented with a zero vector, and thus the mail may be determined as a normal mail. Therefore, a junk mail being represented with a zero vector may not be filtered out, which may further degrade a filtering correction ratio.

## Summary of the Invention

Embodiments of the invention provide a method, a device and a system for determining a mail class which can accelerate determination of the mail class of a mail.

An embodiment of the invention provides a method for determining a mail class including:

reading a mail head of a mail with an unknown class;

extracting a first field in compliance with a first preset condition from the mail head;

vectorizing combinations of the first field and its presentation forms into a first preset number of first feature vectors;

taking the first feature vectors as input to a preset predictive algorithm for calculation with use of data stored for a pre-established behavior model to derive a calculation result; and

determining the mail class of the mail with an unknown class from the calculation result.

In correspondence with the method embodiment, an embodiment of the invention further provides a device for determining a mail class including:

a mail head reading unit adapted to read a mail head of a mail with an unknown class;

a first field extracting unit adapted to extract a first field in compliance with a first preset condition from the mail head;

a first vectorizing unit adapted to vectorize the first field into a first preset number of first feature vectors;

a calculating unit adapted to take the first feature vectors as input to a preset predictive algorithm for calculation with use of data stored for a pre-established behavior model to derive a calculation result; and

a determining unit adapted to determine the mail class of the mail with an unknown class from the calculation result.

Correspondingly, an embodiment of the invention further provides a system for determining a mail class including:

a behavior model establishing unit adapted to establish a behavior model for determination of a mail class by a preset learning algorithm in a way that a mail head of a mail with a known class is read, a field in compliance with a preset condition is extracted from the mail head of the mail with a known class, and the field is vectorized into a preset number of feature vectors; and

a mail class determining unit adapted to read a mail head of a mail with an unknown class, to extract a field in compliance with the preset condition from the mail head of the mail with an unknown class, to vectorize the field into the preset number of feature vectors, to take the feature vectors as input to a preset predictive algorithm for calculation with use of data stored for the behavior model to derive a calculation result, and to determine the mail class from the calculation result.

**Brief Description of the Drawings**

Figure 1 is a structural diagram of a first embodiment of a device for establishing a behavior model among the embodiments of the invention;
Figure 2 is a flow diagram of a first embodiment of a method for determining a mail class among the embodiments of the invention;
Figure 3 is a flow diagram of a third embodiment of a method for determining a mail class among the embodiments of the invention;
Figure 4 is a structural diagram of a first embodiment of a device for determining a mail class among the embodiments of the invention;
Figure 5 is a structural diagram of a second embodiment of a device for determining a mail class among the embodiments of the invention; and
Figure 6 is a structural diagram of a first embodiment of a system for determining a mail class among the embodiments of the invention.

**Detailed Description of the Invention**

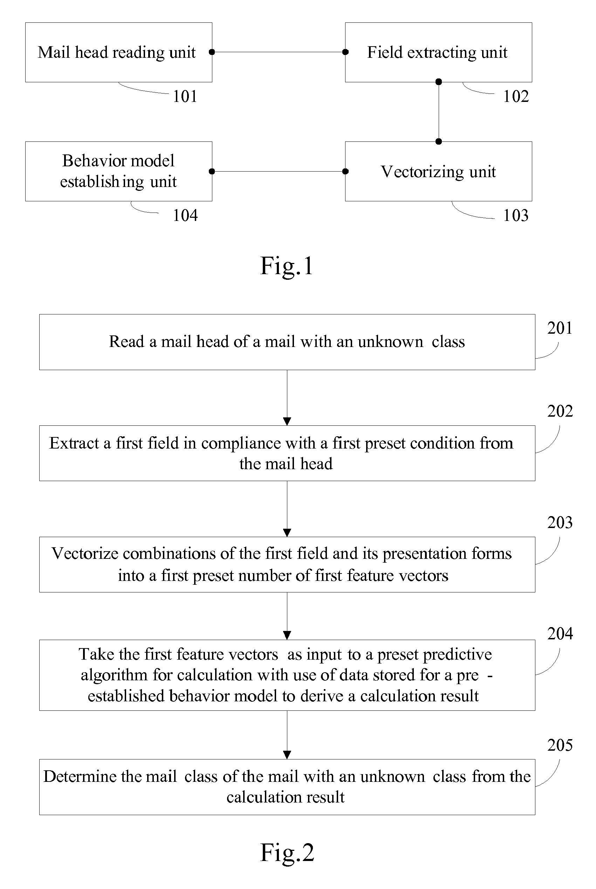

The invention will be further described in details below with reference to the drawings by way of the embodiments to make the objects, aspects and advantages of the invention more apparent.
As illustrated in Figure 1, a first embodiment of a device for establishing a behavior model according to the invention is as follows.
The device for establishing a behavior model includes a mail head reading unit 101, a field extracting unit 102, a vectorizing unit 103 and a behavior model establishing unit 104.
The mail head reading unit 101 is adapted to read a mail head of a mail with a known class.
A mail head refers to interaction of some signaling transferred between mail servers in terms of the Simple Message Transfer Protocol (SMTP). In general, these contents are invisible to a composer and a receiver of the mail. In terms of the SMTP protocol, in order to ensure normal transfer of a mail, contents in the part of the mail head are formatted and some fields therein are also preset as prescribed in the SMTP protocol. A mail with a known class refers to that the class of the mail is known, i.e. it has been determined whether the mail is a normal or junk mail.
The field extracting unit 102 is adapted to extract from the mail head a field in compliance with a preset condition.
Mail heads are usually in compliance with requirements as prescribed in the SMTP protocol, and therefore some fields are common in the mail head of each of the mails. In terms of the SMTP protocol, the following fields in a mail head are vulnerable to falsification: the From field, the To field, the Reply-To field, the Delivered-To field, the Return-Path field, the Received field, and the Date field. Here, the From field contains the mail address of a sender, the To field contains the mail address of a receiver, the Reply-To field contains a reply-to mail address (i.e. a mail address to which the receiver replies), and the Return-Path field contains the mail address of a final sender added by the last server in the course of forwarding of the mail. Since these fields are vulnerable to falsification, part or all of them can be selected using the preset condition during classification of the mail, although the embodiment of the invention is not limited to these fields.

The vectorizing unit 103 is adapted to vectorize the fields into a preset number of feature vectors.

After the fields in compliance with the preset condition are extracted, the fields are combined into several combinations depending upon each of the different fields. For example, if some fields of a mail satisfy a combination, this combination takes a value of 1. Otherwise, if any fields of a mail do not satisfy a combination, this combination takes a value of 0. Thus, a series of values obtained for the mail is the value of a feature vector. This calculation process is referred to as a vectorization process.

For example, the above fields in a mail head each may be presented in the following forms: 1) the field is absent; 2) the field is present but null; 3) the mail address of the sender contains a null username, such as @zhangsan.com; 4) the mail address of the sender contains a null domain name; 5) the mail address of the sender is in an incorrect format, such as presence of an illegal character like "*"; 6) no Domain Name Server (DNS) record can be found in accordance with the domain name of the mail address; 7) the mail address of the sender contains two symbols of @; 8) the mail address of the sender contains no symbol of @; 9) the mail address of the sender contains only a symbol of @ but neither user name nor domain name; 10) the data value in the Date is obsolete; and 11) the number of the Received is excessively large, i.e. an excessive number of routes have been passed.

Thus, the eleven scenarios in combination with the seven fields may give rise to seventy-seven features, so that these fields can be vectorized into seventy-seven feature vectors. However, in practical applications, not all the eleven scenarios will appear for some fields. For example, the Date field may correspond only to the three scenarios of 1), 2) and 10). Furthermore, some fields if combined for determination may be more effective. Therefore, that how many features to be selected can be determined depending upon a specific implementation.

The behavior model establishing unit 104 is adapted to establish a behavior model for the feature vectors in a preset learning algorithm.

After the feature vectors into which the fields are vectorized have been obtained, these feature vectors can be combined into a set of feature vectors as an input to the preset learning algorithm for calculation, thereby obtaining parameters to be stored in a behavior model which is a visual file for storage of the parameters to be used for determination of a mail class. These parameters are relevant to the preset algorithm and will be called for determination of a mail class with use of the preset predictive algorithm. These parameters are stored in establishment of the behavior model, i.e. obtained in a learning process using the preset learning algorithm, and will vary constantly as input data in the learning process varies constantly. The accuracy and effectiveness of the parameters will be enhanced constantly as learned samples are improved constantly and the input data becomes increasingly reasonable, and therefore the calculation accuracy of the preset predictive algorithm will be improved accordingly.

As can be seen from above, the device for establishing a behavior model according to the embodiment of the invention can take advantage of the information of a mail head to establish a behavior model required for determination of a mail class. Since the mail head shall comply with the SMTP protocol, it is possible to avoid slow training or incomplete training set in establishment of the behavior model. Also in determination of a mail class, the fields to be determined can all be preset, and therefore a mail class can be determined rapidly. Further, since the behavior model is established from the mail head, the behavior model can be useful in determination regardless of the specific language of the mail body.

The invention further provides an embodiment of establishing a behavior model by a Support Vector Machine (SVM). The SVM is a data-based machine learning method on the basis of the statistic learning Vapnik-Chervonenkis Dimension theory and the structure risk minimum principle. The SVM intends to seek an optimal trade off between the complexity (i.e. the precision of learning a specific training sample) and the learning ability (i.e. the ability to identify any sample in an error-free way) of the model from information of limited samples, so as to achieve an optimal generalization ability. The SVM has advantages as follows. Firstly, it is designed specially for the case of limited samples and intended to obtain an optimal solution for the existing information instead of just an optimal value in the case that the number of samples tends to be infinite. Secondly, the algorithm is translated finally into a problem of quadratic optimal seeking which theoretically results in a globally optimal point and thus avoids the problem of a locally optimal value inevitable in a neural network method. Thirdly, the algorithm translates a real problem into a high-dimension feature space by nonlinear transformation and constructs a linear decision function in the high-dimension feature space for a nonlinear decision function in the original space. Such special nature can ensure good generalization ability for the machine learning method while solving smartly the problem of the number of dimensions in that the complexity of the algorithm is independent of the number of dimensions of samples. In the SVM method, a number of existing learning algorithms such as polynomial approximation, a Bayesian classifier, a Radical Basic Function (RBF), a multi-layer sensor network, etc., can be implemented simply by defining different inner product functions. The conditions of a small number of samples, nonlinearity, a large number of dimensions, a local minimum point, etc., in practice can be addressed well.

In the present embodiment of establishing a behavior model through the SVM, the seven fields described in the first embodiment is adopted. Since the From field, the To field, the Reply-To field, the Delivered-To field and the Return-Path field are expressed in the same format, every two of the five fields can be combined, obtaining ten combinations. These ten combinations, together with the above seven fields, give rise to seventeen combinations, and several features can be extracted from those combinations further in conjunction with the eleven scenarios described in the first embodiment. Of course, scenarios other than the above eleven scenarios will be possible in a practical application, and an alternative number of features can be selected depending upon a specific application. In this embodiment, 106 features are extracted from continuous tests.

Thus, in establishment of a behavior model, the above seven fields are extracted from the mail head and combined into seventeen combinations, and the mail head can be split into 106 feature vectors by combining the combinations with the eleven scenarios. Then, the SVM learning algorithm is executed with the resulting 106 feature vectors to establish a behavior model.

As illustrated in Figure 2, the first embodiment of determining a mail class according to the invention includes the following steps.

Step 201. A mail head of a mail with an unknown class is read.

Step 202. A first field in compliance with a first preset condition is extracted from the mail head.

The first field can be, but not limited to, any one or combination of the From field, the To field, the Reply-To field, the Delivered-To field, the Return-Path field, the Received field and the Date field. In order to identify accurately the mail class of the mail with an unknown class, the first condition shall be set for the extracted first field, i.e. making it to be the same as the field extracted in establishment of the behavior model.

Step 203. Combinations of the first field and its presentation forms are vectorized into a first preset number of first feature vectors.

The vectorization process is the same as in establishment of the behavior model, and the number of the resulting feature vectors is the same as in establishment of the behavior model, thereby enabling conformity with the behavior model and ensuring the accuracy of the determination.

Step 204. The first feature vectors are input to the preset predictive algorithm for calculation with use of data stored for the pre-established behavior model to derive a calculation result.

After the feature vectors resulting from vectorization of the mail head have been obtained, these feature vectors are combined into a set of feature vectors, which are input to the preset predictive algorithm for calculation to derive a calculation result, where the parameters in the behavior model are used as parameters for the predictive algorithm. Since the behavior model is derived from a constant training and the parameters therein are optimized constantly along with the training, the use of these parameters can result in correct calculation. Furthermore, values of the feature vectors in the set of feature vectors optimized in the behavior model are engaged in calculation of the predictive algorithm, so that the calculation result can be made more accurate.

Particularly, the preset predictive algorithm shall correspond to the learning algorithm used in establishment of the behavior model. For example, if the SVM learning algorithm is used in establishment of the behavior model, the predictive algorithm can adopt an SVM predictive algorithm. If the Radical Basic Function (RBF) learning algorithm is used in establishment of the behavior model, the predictive algorithm can adopt an RBF predictive algorithm accordingly. Of course, in a practical application, the learning algorithm and the predictive algorithm may not necessarily correspond to each other. For example, if the SVM learning algorithm is used in establishment of the behavior model, a predictive algorithm can be used in determination if that predictive algorithm offers a better calculation effect than the SVM predictive algorithm in a practical application.

Taking it as an example that mails are only classified into two classes, i.e. junk mails and non-junk mails, a general calculation process of the SVM predictive algorithm is as follows. In view of the only two classes, the data can be classified into two classes labeled with 0 and 1, and a model is derived by training for the two classes. In a prediction, test samples each are predicted using all the models resulting from the training, and the class to which the test sample belongs can be determined from a predictive value of 0 or 1.

The process can be expressed with the following mathematic problem.

The object is to find a hyperplane as a classification plane where the two classes of data points can be separated correctly as many as possible while the separated two classes of data points are the farthest from the classification plane. An equation of the plane is assumed as y=wx+b, and the object is primarily to solve w and b.

The solving method is to construct a restricted optimization problem, particularly a restricted quadratic planning problem, which is solved to derive a classifier.

In establishment of a model, a sub-module firstly vectorizes mails in a training set and then establishes a model based upon the idea of the Support Vector Machine, particularly a C-Support Vector Machine (C-SVC) classifier, a dual function of which is used to calculate the following major parameters.

$$r_1 = \frac{\sum_{0<\alpha<C,\, yi=1} \nabla f(\alpha)_i}{\sum_{0<\alpha<C,\, yi=1} 1}$$

$$\rho = \frac{r_1 + r_2}{2}$$

Finally, a decision function of the classifier is obtained, and the major parameters and decision information are stored into a model file for later calling by a determination module, where the model file includes the following contents.

The major parameters are the parameters in the behavior model, and the decision information refers to values of modified feature vectors of the mail.

The prediction process is as follows.

Firstly the mail to be processed is vectorized, and then the above two parts of contents in the model file are read and induced into the decision function of:

$$f(x) = \text{sgn}(\sum_{i=0}^{l} \alpha_i y_i K(x, x_i) + b)$$

where

$$K(x_i, x_j) = \exp(-\gamma \|x_i - x_j\|^2), \gamma > 0$$

Finally a classification result is determined from a resulting value of f(x).

Step 205. The mail class of the mail with an unknown class is determined from the calculation result.

A value can be derived from calculation of the predictive algorithm, and the class of the mail can be determined from the prescription for vectorization of the mail head in presetting the behavior model. For example, if a normal mail takes a value of 1 in establishment of the behavior model, the mail with an unknown class is determined as a normal mail when the calculation result is 1. Otherwise, the mail with an unknown class is determined as a junk mail when the calculation result is 0. Of course, other integer values can also be selected arbitrarily to identify the classes, and they are determined primarily depending upon values adopted for a normal mail and a junk mail in establishment of the behavior model.

As can be seen from above, the present embodiment vectorizes the mail head and then adopts the predictive algorithm corresponding to the learning algorithm used in establishment of the behavior model together with data stored for the behavior model pre-established from the training to derive a calculation result from which the mail class is determined. Since the mail head shall comply with the SMTP protocol, therefore in determination of the mail class, the fields to be determined all have been preset, thereby resulting in rapid determination of the mail class. Further, since the behavior model is established from the mail head, the behavior model can be useful in determination regardless of a specific language of the mail body.

In correspondence with the second embodiment of establishing a behavior model, the invention further provides a second embodiment of a method for determining a mail class. In the present embodiment, after a mail has been received, corresponding seven fields are extracted from a mail head of the mail and vectorized into 106 feature vectors. Then, these vectors are input to the SVM predictive algorithm for calculation with use of data stored for a pre-established behavior model. Next, a calculation result is determined in a way that, for example, if the result is 1, it indicates that the mail is a normal mail, otherwise the mail is a junk mail.

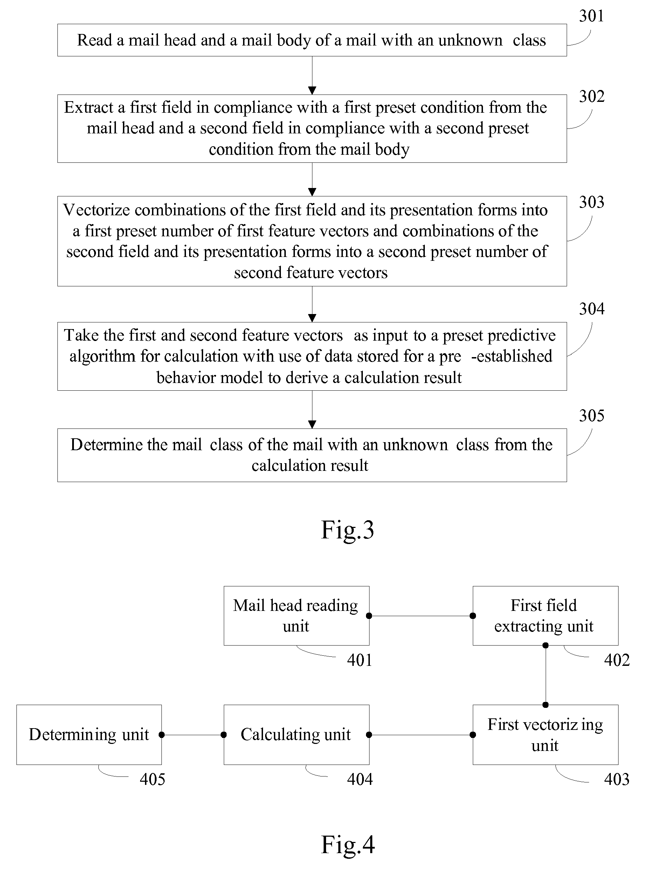

As illustrated in Figure 3, a third embodiment of a method for determining a mail class according to the invention includes the following steps.

Step 301. A mail head and a mail body of a mail with an unknown class are read.

Step 302. A first field in compliance with a first preset condition is extracted from the mail head, and a second field in compliance with a second preset condition is extracted from the mail body.

Operations for the mail body are similar to those for the mail head except that the field for the mail body is selected by selecting a corresponding keyword from the mail body as in the prior art.

Step 303. Combinations of the first field and its presentation forms are vectorized into a first preset number of first feature vectors, and combinations of the second field and its presentation forms are vectorized into a second preset number of second feature vectors.

Presentation forms of a keyword may include presence of the keyword, absence of the keyword, the number of occurrence of the keyword, etc.

Step 304. The first feature vectors and the second feature vectors are input to a preset predictive algorithm for calculation with use of data stored for a pre-established behavior model to derive a calculation result.

Step 305. The mail class of the mail with an unknown class is determined from the calculation result.

In this embodiment, the mail body of the mail with an unknown class is processed additionally, so that more accurate determination of the mail class can be made comprehensively from the contents of the mail head and the mail body.

Figure 4 illustrates a first embodiment of a device for determining a mail class according to the invention, including the following units.

A mail head reading unit 401 is adapted to read a mail head of a mail with an unknown class.

A first field extracting unit 402 is adapted to extract a first field in compliance with a first preset condition from the mail head.

The first field can be but not limited to any one or combination of the From field, the To field, the Reply-To field, the Delivered-To field, the Return-Path field, the Received field and the Date field, while it shall be the same as the field in establishment of a behavior model.

A first vectorizing unit 403 is adapted to vectorize the first field into a first preset number of first feature vectors.

The vectorization process is the same as in establishment of the behavior model, and the number of the resulting feature vectors is also the same as in establishment of the behavior model.

A calculating unit 404 is adapted to take the first feature vectors as input to a preset predictive algorithm for calculation with use of data stored for the pre-established behavior model to derive a calculation result.

Particularly, relevant information of the preset predicative algorithm is determined depending upon a learning algorithm used in establishment of the behavior model and is stored in the behavior model. After the vectors resulting from vectorization of the mail head are obtained, these vectors are input to the preset predictive algorithm for calculation with use of data stored for the pre-established behavior model to derive a calculation result.

A determining unit 405 is adapted to determine the mail class of the mail with an unknown class from the calculation result of the calculating unit 404.

A value of typically 1 or 0 can be derived from calculation of the predictive algorithm. Depending upon different parameters in the behavior model, the mail is determined as a normal mail when the calculation result is 1, while the mail is determined as a junk mail when the calculation result is 0. Of course, the value will not be limited to 1 or 0 in a practical application and can be determined particularly depending upon values adopted for a normal mail and a junk mail in establishment of the behavior model.

As can be seen from above, the present embodiment vectorizes the mail head and then adopts the predictive algorithm corresponding to the learning algorithm used in establishment of the behavior model together with data stored for the behavior model pre-established from the training to derive a calculation result from which the mail class is determined. Since the mail head shall comply with the SMTP protocol, therefore in determination of the mail class, the fields to be determined all have been preset, thereby resulting in rapid determination of the mail class. Further, since the behavior model is established from the mail head, the behavior model can be useful in determination regardless of a specific language of the mail body.

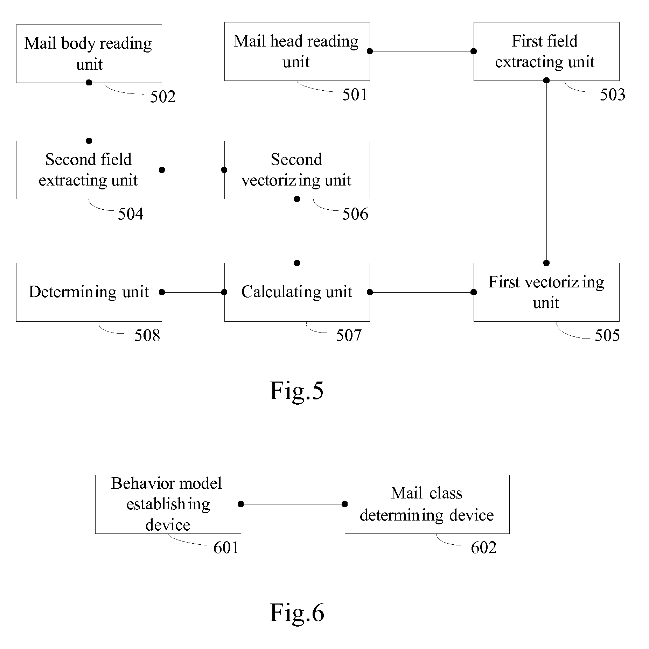

Furthermore, the invention further provides a second embodiment of a device for determining a mail class as illustrated in Figure 5 which includes the following units.

A mail head reading unit 501 is adapted to read a mail head of a mail with an unknown class.

A mail body reading unit 502 is adapted to read a mail body of the mail with an unknown class.

A first field extracting unit 503 is adapted to extract a first field in compliance with a first preset condition from the mail head.

A second field extracting unit 504 is adapted to extract a second field in compliance with a second preset condition from the mail body.

A first vectorizing unit 505 is adapted to vectorize the first field into a first preset number of first feature vectors.

A second vectorizing unit 506 is adapted to vectorize the second field into a second preset number of second feature vectors.

A calculating unit 507 is adapted to take the first feature vectors and the second feature vectors as input to a preset predictive algorithm for calculation with use of data stored for a behavior model to derive a calculation result.

A determining unit 508 is adapted to determine the mail class of the mail with an unknown class from the calculation result of the calculating unit 507.

In this embodiment, the mail body of the mail with an unknown class is processed additionally, so that more accurate determination of the mail class can be made comprehensively from the contents of the mail head and the mail body.

Furthermore, the invention provides a first embodiment of a system for determining a mail class as illustrated in Figure 6 which includes the following units.

A behavior model establishing device 601 is adapted to establish a behavior model for determination of a mail class by a preset learning algorithm in a way that a mail head of a mail with a known class is read, a field in compliance with a preset condition is extracted from the mail head of the mail with a known class, and the field is vectorized into a preset number of feature vectors.

A mail class determining device 602 is adapted to read a mail head of a mail with an unknown class, to extract a field in compliance with the preset condition from the mail head of the mail with an unknown class, to vectorize the field into the preset number of feature vectors, to take the feature vectors as input to a preset predictive algorithm for calculation with use of data stored for the behavior model to derive a calculation result, and to determine the mail class from the calculation result.

In a practical application, functional units in the behavior model establishing device and the mail class determining device for extracting the mail head, for extracting the field, and for vectorization can be shared, thereby reducing the cost of the system for determining a mail class.

This embodiment of the system for determining a mail class can take advantage of the mail head of the mail with a known class to establish the behavior model and use the behavior model for determination of the mail class of the mail with an unknown class. Since the specific field in the mail head is vectorized while the mail head shall comply with the SMTP protocol, therefore in determination of the mail class, the fields to be determined all have been preset, thereby resulting in rapid determination of the mail class. Further, since the behavior model is established from the mail head, the behavior model can be useful in determination regardless of a specific language of the mail body.

The method, device and system for determining a mail class and the device for establishing a behavior model according to the embodiments of the invention have been described in details above, and the above descriptions of the embodiments are provided only to facilitate understanding of the method according to the invention. It will be appreciated for those ordinarily skilled in the art that modifications are possible in specific implementations and applications of the invention without departing from the invention. Accordingly, the specification shall not be taken in any way of limiting the scope of the invention as defined in the appended claims.

**Claims**

1. A method for determining a mail class, comprising:

reading a mail head of a mail with an unknown class;
extracting a first field in compliance with a first preset condition from the mail head;
vectorizing combinations of the first field and its presentation forms into a first preset number of first feature vectors;
taking the first feature vectors as input to a preset predictive algorithm for calculation with use of data stored for a pre-established behavior model to derive a calculation result; and
determining the mail class of the mail with an unknown class from the calculation result.

2. The method for determining a mail class according to claim 1, further comprising:

reading a mail body of the mail with an unknown class;
extracting a second field in compliance with a second preset condition from the mail body;
vectorizing combinations of the second field and its presentation forms into a second preset number of second feature vectors; and
taking the second feature vectors together with the first feature vectors as input to the preset predictive algorithm for calculation with use of the data stored for the behavior model to derive the calculation result.

3. The method for determining a mail class according to claim 1, wherein the behavior model is established by:

reading a mail head of a mail with a known class;
extracting a third field in compliance with a third preset condition from the mail head of the mail with a known class;
vectorizing combinations of the third field into a third preset number of third feature vectors; and

establishing the behavior model for the third feature vectors in a preset learning algorithm.

4. The method for determining a mail class according to claim 3, wherein the third field is the same as the first field.

5. The method for determining a mail class according to any one of claims 1 to 4, wherein the first field comprises any one or combination of the From field, the To field, the Reply-To field, the Delivered-To field, the Return-Path field, the Received field and the Date field.

6. The method for determining a mail class according to claim 3 or 4, wherein the third number is the same as the first number.

7. A device for determining a mail class, comprising:

a mail head reading unit adapted to read a mail head of a mail with an unknown class;
a first field extracting unit adapted to extract a first field in compliance with a first preset condition from the mail head;
a first vectorizing unit adapted to vectorize the first field into a first preset number of first feature vectors;
a calculating unit adapted to take the first feature vectors as input to a preset predictive algorithm for calculation with use of data stored for a pre-established behavior model to derive a calculation result; and
a determining unit adapted to determine the mail class of the mail with an unknown class from the calculation result.

8. The device for determining a mail class according to claim 7, further comprising:

a mail body reading unit adapted to read a mail body of the mail with an unknown class;
a second field extracting unit adapted to extract a second field in compliance with a second preset condition from the mail body; and
a second vectorizing unit adapted to vectorize the second field into a second preset number of second feature vectors;

wherein the calculating unit is adapted to take the first feature vectors and the second feature vectors as input to the preset predictive algorithm for calculation with use of the data stored for the behavior model to derive a calculation result.

9. A system for determining a mail class, comprising:

a behavior model establishing device adapted to establish a behavior model for determination of a mail class by a preset learning algorithm in a way that a mail head of a mail with a known class is read, a field in compliance with a preset condition is extracted from the mail head of the mail with a known class, and the field is vectorized into a preset number of feature vectors; and a mail class determining device adapted to read a mail head of a mail with an unknown class, to extract a field in compliance with the preset condition from the mail head of the mail with an unknown class, to vectorize the field into the preset number of feature vectors, to take the feature vectors as input to a preset predictive algorithm for calculation with use of data stored for the behavior model to derive a calculation result, and to determine the mail class from the calculation result.

10. A computer readable medium comprising code for:

reading a mail head of a mail with an unknown class;
extracting a first field in compliance with a first preset condition from the mail head;
vectorizing combinations of the first field and its presentation forms into a first preset number of first feature vectors;
taking the first feature vectors as input to a preset predictive algorithm for calculation with use of data stored for a pre-established behavior model to derive a calculation result; and
determining the mail class of the mail with an unknown class from the calculation result.

11. A computer readable medium comprising code for:

establishing a behavior model for determination of a mail class by a preset learning algorithm in a way that a mail head of a mail with a known class is read, a field in compliance with a preset condition is extracted from the mail head of the mail with a known class, and the field is vectorized into a preset number of feature vectors;
reading a mail head of a mail with an unknown class;
extracting a first field in compliance with a first preset condition from the mail head;
vectorizing combinations of the first field and its presentation forms into a first preset number of first feature vectors;
taking the first feature vectors as input to a preset predictive algorithm for calculation with use of data stored for a pre-established behavior model to derive a calculation result; and
determining the mail class of the mail with an unknown class from the calculation result.

```
┌──────────────────────────┐              ┌──────────────────────────┐
│  Mail head reading unit  ●──────────────● Field extracting unit   │
│                          │              │                          │
└──────────────────────────┘              └──────────────────────────┘
        ⌐ 101                                      │  ⌐ 102
                                                   │
                                                   │
┌──────────────────────────┐              ┌────────┴─────────────────┐
│  Behavior model          │              │                          │
│  establishing unit       ●──────────────● Vectorizing unit         │
└──────────────────────────┘              └──────────────────────────┘
        ⌐ 104                                         ⌐ 103
```

# Fig.1

```
┌────────────────────────────────────────────────────────────────┐  201
│     Read a mail head of a mail with an unknown class           │╱
└────────────────────────────────────────────────────────────────┘
                                │
                                ▼
┌────────────────────────────────────────────────────────────────┐  202
│  Extract a first field in compliance with a first preset        │╱
│  condition from the mail head                                   │
└────────────────────────────────────────────────────────────────┘
                                │
                                ▼
┌────────────────────────────────────────────────────────────────┐  203
│  Vectorize combinations of the first field and its presentation │╱
│  forms into a first preset number of first feature vectors      │
└────────────────────────────────────────────────────────────────┘
                                │
                                ▼
┌────────────────────────────────────────────────────────────────┐  204
│  Take the first feature vectors as input to a preset predictive │╱
│  algorithm for calculation with use of data stored for a pre -  │
│  established behavior model to derive a calculation result      │
└────────────────────────────────────────────────────────────────┘
                                │
                                ▼
┌────────────────────────────────────────────────────────────────┐  205
│  Determine the mail class of the mail with an unknown class from│╱
│  the calculation result                                         │
└────────────────────────────────────────────────────────────────┘
```

# Fig.2

Read a mail head and a mail body of a mail with an unknown class — 301

Extract a first field in compliance with a first preset condition from the mail head and a second field in compliance with a second preset condition from the mail body — 302

Vectorize combinations of the first field and its presentation forms into a first preset number of first feature vectors and combinations of the second field and its presentation forms into a second preset number of second feature vectors — 303

Take the first and second feature vectors as input to a preset predictive algorithm for calculation with use of data stored for a pre -established behavior model to derive a calculation result — 304

Determine the mail class of the mail with an unknown class from the calculation result — 305

Fig.3

| Mail head reading unit | First field extracting unit |
| 401 | 402 |

| Determining unit | Calculating unit | First vectoriz ing unit |
| 405 | 404 | 403 |

Fig.4

| Mail body reading unit | | Mail head reading unit | | First field extracting unit |
|---|---|---|---|---|
| 502 | | 501 | | 503 |

| Second field extracting unit | | Second vectorizing unit |
|---|---|---|
| 504 | | 506 |

| Determining unit | | Calculating unit | | First vectorizing unit |
|---|---|---|---|---|
| 508 | | 507 | | 505 |

Fig.5

| Behavior model establishing device | | Mail class determining device |
|---|---|---|
| 601 | | 602 |

Fig.6

**EUROPEAN SEARCH REPORT**

Application Number

EP 08 15 9987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHI-YUAN YEH ET AL: "Effective Spam Classification based on Meta-Heuristics" SYSTEMS, MAN AND CYBERNETICS, 2005 IEEE INTERNATIONAL CONFERENCE ON WAIKOLOA, HI, USA 10-12 OCT. 2005, PISCATAWAY, NJ, USA,IEEE, vol. 4, 10 October 2005 (2005-10-10), pages 3872-3877, XP010874965 ISBN: 978-0-7803-9298-4 | 1,3-7, 9-11 | INV. G06Q10/00 H04L12/58 |
| Y | * the whole document * | 2,8 | |
| Y | LE ZHANG, JINGBO ZHU, TIANSHUN YAO: "An Evaluation of Statistical Spam Filtering Techniques" ACM TRANSACTIONS ON ASIAN LANGUAGE INFORMATION PROCESSING, [Online] vol. 3, no. 4, December 2004 (2004-12), pages 243-269, XP002496856 Retrieved from the Internet: URL:http://www.mts.jhu.edu/~marchette/ID08 /p243-zhang.pdf> [retrieved on 2008-09-23] | 2,8 | TECHNICAL FIELDS SEARCHED (IPC) |
| A | * Chapters 1, 2, 2.1, 2.2, 3, 3.1, 3.4, 5.3, 7 * | 1,3-7, 9-11 | H04L G06Q |
| | ----- -/-- | | |

The present search report has been drawn up for all claims

| Place of search | Date of completion of the search | Examiner |
|---|---|---|
| Berlin | 16 October 2008 | Böhmert, Jörg |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**Europäisches Patentamt**
**European Patent Office**
**Office européen des brevets**

# EUROPEAN SEARCH REPORT

Application Number

EP 08 15 9987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/67731 A (MICROSOFT CORP [US]) 29 December 1999 (1999-12-29) * abstract * * page 3, line 1 - page 7, line 9 * * page 10, line 10 - page 11, line 20 * * page 12, line 25 - page 13, line 14 * * page 22, line 20 - page 25, line 28 * * page 27, line 8 - page 35, line 6 * * page 37, line 25 - page 65, line 31 * * claims 1-4,8,9,11,12,14-19,23,24,26,27 * * claims 29-31,33-35,37,41,42,44,45 * * claims 47-49,51,55-57,59,60,62-65 * ----- | 1-11 | |
| A | HARRIS DRUCKER ET AL: "Support Vector Machines for Spam Categorization" IEEE TRANSACTIONS ON NEURAL NETWORKS, IEEE SERVICE CENTER, PISCATAWAY, NJ, US, vol. 10, no. 5, 1 September 1999 (1999-09-01), XP011039368 ISSN: 1045-9227 * the whole document * ----- | 1-11 | |
| | | | TECHNICAL FIELDS SEARCHED (IPC) |

The present search report has been drawn up for all claims

| Place of search | Date of completion of the search | Examiner |
|---|---|---|
| Berlin | 16 October 2008 | Böhmert, Jörg |

## ANNEX TO THE EUROPEAN SEARCH REPORT
## ON EUROPEAN PATENT APPLICATION NO.

EP 08 15 9987

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2008

| Patent document cited in search report | | Publication date | Patent family member(s) | | Publication date |
|---|---|---|---|---|---|
| WO 9967731 | A | 29-12-1999 | EP<br>US | 1090368 A1<br>6161130 A | 11-04-2001<br>12-12-2000 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200710128086

- CN 2008070427 W